Europäisches Patentamt

European Patent Office

Office européen des brevets

(19)

(11) Numéro de publication : **0 171 120 B1**

## FASCICULE DE BREVET EUROPÉEN

(45) Date de publication du fascicule du brevet :
20.09.89

(51) Int. Cl.⁴ : **G 06 F 15/72**

(21) Numéro de dépôt : **85201252.5**

(22) Date de dépôt : **30.07.85**

(54) Procédé et dispositif pour créer et modifier une image synthetique.

(30) Priorité : **10.08.84 FR 8412672**

(43) Date de publication de la demande :
**12.02.86 Bulletin 86/07**

(45) Mention de la délivrance du brevet :
**20.09.89 Bulletin 89/38**

(84) Etats contractants désignés :
**DE FR GB**

(56) Documents cités :
**US--A-- 4 209 832**
**WESCON CONFERENCE RECORD, vol. 24, no. 2/2, 16-18 septembre 1980, pages 1-4, Anaheim, Ca, US; K.M. GUTTAG: "The TMS 9918, video display processor for personal computers"**
**IEEE TRANSACTIONS ON CONSUMER ELECTRO-NICS, vol. CE-25, no. 3, juillet 1979, pages 311-317, IEEE, New York, US; J. BLANK: "System and hardware considerations of home terminals with telephone computer access"**

(73) Titulaire : **RTC-COMPELEC**
**130, Avenue Ledru-Rollin**
**F-75011 Paris (FR)**
**FR**
**N.V. Philips' Gloeilampenfabrieken**
**Groenewoudseweg 1**
**NL-5621 BA Eindhoven (NL)**
**DE GB**

(72) Inventeur : **Goude, Marie**
**Société Civile S.P.I.D 209 rue de l'Université**
**F-75007 Paris (FR)**
Inventeur : **Six, Jean-Claude**
**Société Civile S.P.I.D 209 rue de l'Université**
**F-75007 Paris (FR)**

(74) Mandataire : **Caron, Jean et al**
**SOCIETE CIVILE S.P.I.D. 209, rue de l'Université**
**F-75007 Paris (FR)**

## Description

L'invention concerne un procédé et un dispositif pour créer et modifier le contenu d'une mémoire d'image dans un dispositif de visualisation d'images synthétiques subdivisées en points élémentaires ou pixels dont la couleur et/ou la luminance sont définies par des codes numériques dans ladite mémoire d'image où une position déterminée est attribuée à chaque pixel, l'image comportant des objets pouvant recouvrir au moins partiellement d'autres objets en procurant ainsi l'effet visuel d'être placés en avant de ces derniers, le dispositif comportant en outre une mémoire d'objets, ou magasin, qui contient la description, pixel par pixel, d'une pluralité d'objets parmi lesquels on prélève ceux dont on a besoin pour construire l'image dans la mémoire d'image, et un registre dans lequel sont placées des données indiquant notamment la position des objets dans l'image.

Un tel procédé est utilisé dans des jeux vidéo ou dans des systèmes de visualisation de microordinateurs. La visualisation est faite en général dans ces systèmes au moyen d'un point mobile décrivant une succession de lignes séquentiellement explorées en réponse à des signaux de synchronisation horizontale et verticale. On connaît des procédés pour créer l'image, selon lesquels les coordonnées x et y de chaque objet sont comparées au contenu de compteurs qui suivent la position du point le long des lignes de l'image. Les objets sont introduits dans l'image « à la volée » au cours du déplacement du point, lorsque ce dernier passe aux coordonnées x, y de l'objet. Un tel procédé est décrit par exemple dans le brevet anglais GB-2 000 946 A. Ce type de procédé convient mal aux images possédant un grand nombre d'objets, parce qu'il implique alors une trop grande quantité de calculs.

Un autre procédé connu consiste à utiliser une mémoire d'image que l'on remplit à l'avance avec les éléments de l'image, et qui est lue en synchronisme avec le balayage des lignes de l'image. Des procédés de ce type sont décrits par exemple dans le brevet US 4 116 444 où la mémoire d'image ne contient qu'une ligne et doit être remise à jour à chaque ligne, ou dans le brevet US 4 165 072 où la mémoire contient une image complète. Dans ce cas, le nombre d'objets n'est pas limité, mais le procédé exige une taille de mémoire importante.

L'invention concerne un procédé de ce type qui utilise une mémoire d'image complète, et fournit une solution au problème posé par la gestion des recouvrements d'objets les uns par les autres. Il est connu de traiter ce problème en définissant plusieurs plans qui contiennent chacun un ou plusieurs objets, les objets d'un plan dit « avant » devant recouvrir les objets d'un plan dit « arrière ». Lors de l'affichage de l'image, on choisit entre les plans en fonction de règles de priorité basées sur la position avant ou arrière des plans. Un tel procédé est décrit par exemple dans le brevet français n° 2 535 871.

Cette solution conduit à l'emploi de plusieurs mémoires d'image complète, et la taille mémoire nécessaire est extrêmement importante.

L'invention selon les revendications 1 à 9 a pour but de procurer un procédé au moyen duquel, en utilisant une mémoire d'image unique, on puisse gérer d'une manière très simple les recouvrements d'objets : au lieu d'utiliser plusieurs plans, chacun étant représenté par une mémoire d'image distincte, l'invention est basée sur l'idée, à partir d'une mémoire unique, de remplir d'abord toute l'image avec les objets qui sont au fond, puis d'introduire les objets par plans successifs à partir du fond en terminant donc par l'objet le plus en avant, et de sauvegarder, pour chaque objet introduit, les éléments d'image qui se trouvent dans le contour de l'objet avant l'introduction de ce dernier, ce qui permet lorsqu'ensuite cet objet devra être enlevé, de retrouver immédiatement l'élément d'image à remettre à sa place, et de plus, afin d'économiser de la place en mémoire, on utilise la place de la description de l'objet dans le magasin pour y placer provisoirement la description desdits éléments d'image sauvegardés. La description de l'objet n'est pas perdue pour autant, puisque cet objet est dans la mémoire d'image. Celle-ci est donc utilisée non seulement comme description d'image pour la visualisation, mais simultanément comme élément provisoire de stockage d'objets.

Le procédé de l'invention est ainsi remarquable en ce que la mémoire d'image étant préalablement remplie complètement par une image constituant un arrière-plan, pour placer les objets dans l'image on lit tour à tour dans le registre, dans l'ordre ou les objets doivent se recouvrir les uns les autres en partant de l'arrière-plan, la position de chaque objet à représenter, et à chaque fois on échange, pour ladite position, les codes numériques de la mémoire d'image avec ceux du magasin, et en ce que, pour déplacer un objet, non recouvert par un autre, on effectue deux fois de suite, pour l'objet en question, ledit échange en modifiant, entre les deux fois, la position de cet objet.

Lorsque l'objet à déplacer est recouvert par au moins un autre objet, il convient de prendre des précautions particulières pour le déplacer, et le procédé selon l'invention permet de réaliser ce déplacement très simplement en effectuant d'abord pour tous les objets impliqués un groupe d'échanges, entre la mémoire d'image et le magasin, identiques à ceux réalisés pour placer les objets dans l'image, mais en traitant les objets dans l'ordre inverse, et enfin en replaçant à leur nouvelle position les objets impliqués dans l'image, dans l'ordre où ils doivent être recouverts les uns par les autres, au moyen d'un nouveau groupe d'échanges.

Pour effectuer facilement les opérations qui viennent d'être décrites, il est intéressant que les données de position d'objets successifs soient placées dans le registre dans l'ordre selon lequel ces objets doivent se recouvrir les uns les autres.

La description qui va suivre, en regard des dessins annexés décrivant des exemples non limitatifs fera bien comprendre comment l'invention peut être réalisée.

La figure 1 représente schématiquement l'organisation d'un système permettant la mise en œuvre du procédé de l'invention.

La figure 2 représente, en prenant un arrière-plan et deux objets comme exemple, le traitement réalisé par le procédé.

La figure 3 représente schématiquement l'organisation de l'automate 6 de la figure 1 ;

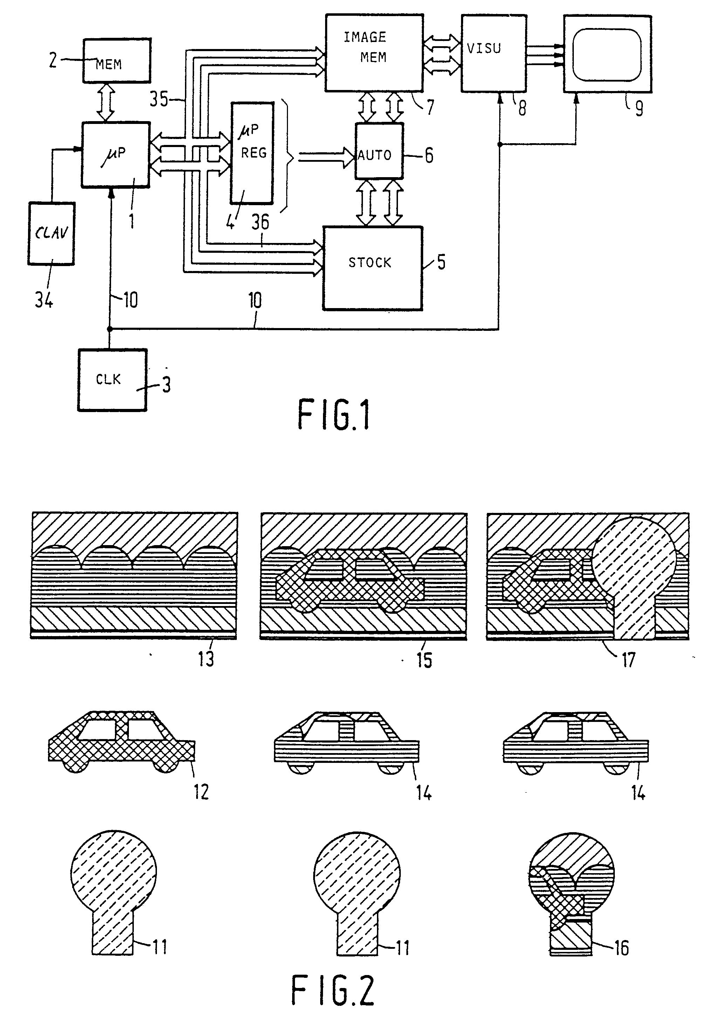

Le système de la figure 1 comporte un microprocesseur 1 associé à un clavier de commande 34 éventuellement muni d'un levier de contrôle du type « manche à balai » pour commander le déplacement d'objets, et à une mémoire de programme 2 qui contient des instructions pour le système. Il comporte en outre un circuit 8 pour la visualisation de l'image, circuit qui extrait d'une mémoire d'image 7 les données concernant les pixels à afficher, en synchronisme avec la description de l'image, et qui les fournit à une afficheur proprement dit 9, par exemple un tube cathodique en couleurs avec ses systèmes de commande de luminance, de couleur, et de déviation. Un tel circuit 8 est bien connu et facilement réalisable par l'homme du métier. Une horloge 3 fournit des signaux de synchronisation de ligne et de trame aux circuits 8 et 9 ainsi qu'au microprocesseur. En outre, un registre 4 pour enregistrer des données indiquant les positions des objets dans la mémoire d'image synthétique 7 est mis à jour par le microprocesseur 1 et lu par un automate 6 qui transfère des données vers la mémoire d'image 7 depuis une mémoire d'objets 5 appelée magasin, qui contient la description, objet par objet et pixel par pixel, d'une pluralité d'objets susceptibles d'être appelés dans l'image, c'est-à-dire dans la mémoire d'image 7.

En outre, cet automate peut réaliser également un échange de données entre la mémoire d'image 7 et le magasin 5. Le microprocesseur peut accéder directement au contenu de la mémoire d'objets 5 et de la mémoire d'image 7 par des bus de données et d'adresses 35, 36.

L'image est subdivisée en points élémentaires ou pixels et comporte par exemple 280 lignes de 512 points chacune, soit 143 360 pixels au total. La couleur de chacun de ces pixels est définie par exemple, dans une palette de 16 couleurs, au moyen de 4 bits par pixel (dans une image noir et blanc, ces 4 bits pourraient définir une gamme de gris). La mémoire d'image 7 a donc une capacité de 4 bits × 143 360 pixels = 573 440 bits. La mémoire d'image est organisée par blocs de 16 bits disposés en lignes et en colonnes. Il s'agit d'une mémoire dynamique qui a besoin d'être rafraîchie à intervalles réguliers. Chaque bloc de 4 bits correspond à un point de l'image et peut être lu par adressage ligne/colonne en fonction des coordonnées X, Y du point dans l'image. En pratique ces blocs sont écrits et lus par groupes de 4, soit 16 bits à la fois, pour accélérer le processus, ce qui ne change rien au principe de base selon lequel une position déterminée est attribuée dans la mémoire à chaque pixel.

Pour créer une image, on remplit d'abord la mémoire d'image complètement par des codes définissant tous les pixels d'un arrière-plan. Ces codes pourraient se trouver dans le magasin mais ils sont plus avantageusement extraits d'une mémoire de grande capacité, par exemple un disque magnétique, et chargés directement dans la mémoire d'image par le microprocesseur via les bus 35, 36. Pour placer ensuite les objets mobiles on lit tour à tour dans le registre 4, dans l'ordre où les objets doivent se recouvrir les uns les autres c'est-à-dire en partant de l'objet le plus au fond pour finir par l'objet situé en premier plan, la position dans l'image de chaque objet à représenter.

Contrairement aux procédés connus qui utilisent un nombre limité de plans d'image égal au nombre de mémoires d'image, on a ici autant de plans que d'objets, chaque objet étant situé devant ou derrière un autre.

Avantageusement, les données de position d'objets successifs sont placées dans le registre dans l'ordre selon lequel ces objets doivent se recouvrir les uns les autres. Ceci constitue le moyen le plus simple pour définir l'ordre dans lequel on doit les placer. Il suffit alors de lire le registre en série.

En plus de la position de chaque objet définie par ses coordonnées X, Y dans l'image, c'est-à-dire en pratique par son adresse dans la mémoire d'image 7, ce registre contient également : l'emplacement de la définition de l'objet dans le magasin définie par son décalage ou « offset » par rapport à une adresse de départ, les dimensions de l'objet : hauteur et largeur, et quelques codes d'opération qui seront expliqués plus loin. Chaque objet est défini dans une fenêtre rectangulaire. Comme les objets ne sont pas toujours rectangulaires on est bien entendu amené à utiliser la notion de transparence. Une des 16 couleurs est utilisée pour indiquer la transparence. Lors du traitement des objets un pixel de couleur transparente est donc considéré comme signifiant : « pas d'objet en ce point ». L'usage de fenêtre rectangulaires facilite le repérage des coordonnées, chaque ligne d'un objet commençant toujours à la même abscisse.

A chaque fois que l'on place un objet dans la mémoire d'image, on échange pour chaque pixel de l'objet des codes numériques de la mémoire d'image avec ceux du magasin. Cette opération est faite, par exemple, par bloc de 8 pixels, soit 32 bits. Supposons par exemple que les 8 pixels de l'objet en magasin soient les suivants :

T  T  T  M  M  M  M  M

où T : « transparent » et M : « marron », et que la mémoire d'image contienne un fond gris G et bleu B, les pixels de cette mémoire étant les suivants :

G  G  G  G  G  G  B  B

Pour les trois premiers pixels T de l'objet, on ne modifie rien dans les mémoires. Lorsqu'on rencontre le véritable objet, c'est-à-dire une couleur autre que T, on échange les pixels « image » avec les pixels « magasin ».

On retrouve donc après cette opération les huit pixels suivants, respectivement dans le magasin et dans l'image :

magasin : T  T  T  G  G  G  B  B

image : G  G  G  M  M  M  M  M

On peut d'ailleurs procéder selon diverses variantes, par exemple permuter les codes T seulement (au lieu de les ignorer) et ensuite permuter l'ensemble des 8 pixels ; cela conduit au même résultat.

Ce processus est illustré par la figure 2. On a par exemple initialement un fond 13 dans la mémoire d'image et une automobile 12 dans le magasin. Après un échange tel que décrit ci-dessus, l'automobile se retrouve dans l'image 15 et les éléments de paysage situés à l'intérieur du contenu du véritable objet (non transparent) se retrouvent sous la forme de l'objet 14 dans le magasin.

Pour déplacer un objet, non recouvert par un autre, par exemple l'automobile de l'image 15, on effectue d'abord une première fois un échange de pixels, ce qui conduit dans le cas de l'exemple ci-dessus aux blocs de pixels suivants, qui correspondent à une remise en l'état antérieur :

magasin : T  T  T  M  M  M  M  M

image : G  G  G  G  G  B  B

Alors on modifie l'indication de position concernant cet objet dans le registre 4. Supposons par exemple qu'on décale cet objet de deux points vers la droite. Les huit pixels du fond correspondant à ceux de l'objet ci-dessus deviennent alors :

image : G  G  G  G  B  B  B  B

On procède à un deuxième échange des points d'image véritable, ce qui conduit aux huit pixels suivants :

magasin : T  T  T  G  B  B  B  B

image : G  G  G  M  M  M  M  M

Cet objet, par exemple l'automobile de la figure 2, peut être recouvert par un autre : lors de la création de l'image, ayant obtenu l'image 15 et l'objet 14 en magasin, on procède à un nouvel échange pour un objet suivant, dans l'ordre où les objets doivent se recouvrir les uns les autres en partant de l'arrière-plan ; dans l'exemple de la figure 2 l'objet suivant est un arbre 11 qui doit recouvrir une partie de l'automobile pour fournir l'image 17.

L'échange a lieu entre l'objet 11 et l'image 15 pour fournir l'objet 16 en magasin et l'image 17. L'objet 14 en magasin n'est pas touché.

Après qu'un objet ait été placé dans l'image, sa description est modifiée dans le registre 5, et n'y est donc plus disponible sous la forme initiale. Il est donc nécessaire, si plusieurs objets identiques sont utilisés dans l'image, que chacun de ces objets soit décrit de façon distincte dans le magasin 5. S'il y a, par exemple, deux automobiles identiques du modèle référencé 12, le microprocesseur 1 doit, avant toute manipulation par l'automate, placer deux descriptions identiques de cette automobile à deux adresses distinctes dans le magasin 5. Lorsque le registre 4 sera lu dans l'ordre des objets depuis l'arrière-plan jusqu'au premier plan, on rencontrera donc une première adresse dans 5 pour l'automobile placée le plus au fond, puis une deuxième adresse pour l'automobile placée le plus en avant.

Pour déplacer un objet recouvert par un ou plusieurs autres, on effectue d'abord pour tous les objets impliqués un ensemble d'échanges, entre la mémoire d'image et le magasin, identiques à ceux réalisés pour placer les objets dans l'image, mais en traitant les objets dans l'ordre inverse, on modifie ensuite les indications de position concernant ces objets dans le registre, et enfin on remplace les objets impliqués dans l'image, dans l'ordre où ils doivent se recouvrir les uns les autres, au moyen d'un nouvel ensemble d'échanges.

Par exemple dans le cas représenté par la figure 2 on effectue d'abord l'échange 16-17 ce qui donne 11-15, puis l'échange 14-15 ce qui donne 12-13. On traite donc l'arbre puis l'automobile, c'est-à-dire qu'on traite les objets dans l'ordre inverse de celui utilisé pour placer les objets dans l'image. Ensuite on modifie par exemple la coordonnée X de la voiture pour l'avancer, puis on reconstruit l'image par les échanges

4

successifs 12-13 (ce qui donne 14-15) et 11-15 (ce qui donne 16-17), cette fois-ci dans l'ordre : automobile puis arbre. En pratique cela signifie que, pour placer un groupe d'objets dans l'image, on lit le registre 4 dans un sens, et pour enlever ce même groupe d'objets, on lit le même registre dans l'autre sens. Plus précisément si, pour placer une partie des objets on lit une partie du registre, pour enlever les mêmes objets on lira dans l'autre sens la même partie du registre.

Lorsque l'on désire mouvoir un objet, il est donc nécessaire de savoir si cet objet est ou non recouvert, au moins en partie, par un autre objet.

On peut combiner deux techniques pour répondre à cette question. L'une de ces techniques consiste à enlever et replacer tous les objets dès qu'on veut déplacer au moins un objet ; on améliore cette technique en remarquant que, les objets étant rangés dans l'ordre des plans, si l'on part du premier plan pour établir les objets initiaux dans le magasin, dès que l'on a traité l'objet à déplacer situé le plus en arrière, est inutile d'aller plus loin. Si on place de préférence les objets appelés à être souvent déplacés dans les premiers plans, le travail est alors réduit.

L'autre technique consiste à calculer les interférences entre chaque objet à déplacer et l'ensemble des autres objets situés en avant de l'objet à déplacer, en fonction des coordonnées et dimensions pour savoir s'ils se recouvrent ou non, aussi bien avant qu'après le déplacement. Si l'on se base sur la véritable forme des objets ce calcul est très long ; si l'on se base seulement sur les fenêtres rectangulaires entourant chaque objet, et qui sont définies dans le registre 4, les calculs sont très simplifiés. Ce calcul peut indiquer qu'un objet recouvre l'objet à déplacer alors qu'il n'en est rien, si en réalité la partie recouvrante est transparente, mais par contre si le calcul indique que les rectangles ne se recouvrent pas, il est alors inutile de traiter l'objet immobile, bien qu'il soit dans un plan avant. On peut imaginer plusieurs degrés dans la combinaison de ces deux techniques. Un procédé consiste, par exemple, à calculer comme indiqué ci-dessus les interférences en mémorisant tous les objets ayant une partie de rectangle commune avec au moins l'un des objets à déplacer, puis à lire le registre 4 dans l'ordre voulu (c'est-à-dire d'abord du premier plan vers l'arrière-plan, puis dans l'autre sens après modification de certaines coordonnées d'objets) et à ne procéder à l'échange de pixels que si les objets rencontrés dans le registre font partie de la liste précédemment mémorisée (au lieu de mémoriser une liste, on peut aussi affecter des drapeaux à chaque objet du registre 4).

Si l'on souhaite intervertir des plans, c'est-à-dire faire passer certains objets de l'arrière-plan vers l'avant, il suffit de traiter les objets dans un ordre différent lorsqu'on replace les objets dans l'image, c'est-à-dire qu'il suffit de changer l'ordre des objets dans le registre 4, entre les deux groupes d'échanges.

De même on peut supprimer ou ajouter des objets dans le registre 4, ce qui entraîne que ces objets disparaîtront ou respectivement apparaîtront lors du prochain ensemble d'échanges. Mais un objet ne peut être ajouté ou supprimé dans un groupe d'objets du registre, qu'après avoir réalisé le premier ensemble d'échanges replaçant les objets et l'image dans l'état où il ne reste plus que le fond et les objets d'arrière-plan immobiles, par exemple l'état représenté par 11, 12, 13 dans la figure 2.

L'automate 6 est principalement constitué d'éléments matériels, compteurs, registres, et réseaux logiques câblés permettant d'effectuer les transferts nécessaires beaucoup plus rapidement qu'un dispositif à base de logiciel ne pourrait le faire. Il a des fonctions multiples. Il est muni de moyens pour échanger des données entre le magasin et la mémoire d'image 7 selon le processus expliqué ci-dessus. Il est aussi muni de moyens pour transférer des données du magasin vers l'image, sans échange : ceci permet par exemple, d'introduire des objets dans le fond pour modifier définitivement ce dernier. Il est encore muni de moyens pour transférer des données de l'image vers le magasin, sans échange : ceci permet de créer de nouveaux objets en magasin à partir d'éléments de l'image à un instant donné. Il peut aussi changer la couleur des objets lors d'un transfert vers l'image. Les opérations qu'il doit réaliser lui sont indiquées par des codes d'opération associés à l'objet dans le registre 4. Ces codes indiquent en outre un mot d'état pour échanger des informations entre le microprocesseur et l'automate. Le registre 4 peut en outre indiquer en une seule fois, lors du déplacement d'objets, l'ancienne et la nouvelle position de l'objet et l'automate réalisera alors tout seul les ensembles d'échanges dans un sens puis dans l'autre. L'automate 6 peut déplacer rapidement un pixel ou un groupe de pixels d'une position de mémoire source vers une position de mémoire destinataire, avec manipulation du contenu du/des pixel(s) comme expliqué plus haut. Il peut être programmé par une liste de commandes écrites dans une mémoire du système, ou directement par un microprocesseur.

Cet automate est capable de procéder à des manipulations récurrentes dans le cas où les éléments à traiter sont situés à des adresses successives en mémoire, en tenant compte des décalages rendus nécessaires par l'organisation en blocs de 4 pixels.

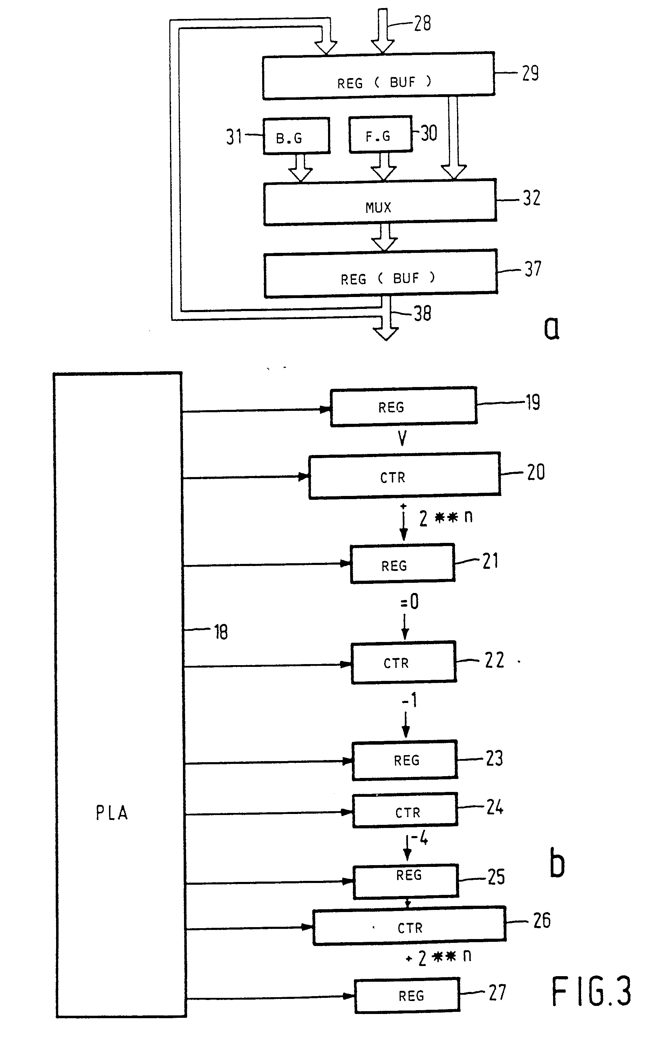

L'automate schématisé par la figure 3 est constitué de deux parties, l'une pour le traitement des adresses, l'autre pour le traitement des données.

La partie pour le traitement des données est organisée par blocs de quatre pixels. Elle comprend essentiellement un multiplexeur 32, deux registres-tampons 29, 37, un registre de plan arrière et un registre de plan avant 30, 31.

Le multiplexeur 32 est capable de charger, dans un des registres-tampon 37, des données provenant de l'autre registre-tampon 29 ou de l'un ou des deux registres de plan avant et/ou arrière 30, 31. Les chargements sont réalisés de différentes manières suivant l'opération demandée par le code d'opération, et le contenu des pixels eux-mêmes. Par exemple, pour réaliser un échange comme décrit plus haut, les bits ne sont transférés d'un registre à l'autre qu'après un test réalisé par logique câblée et portant à chaque fois sur 4 bits, soit un pixel à la fois, test destiné à vérifier si le pixel est transparent ou non.

Le bus 38 permet de charger le contenu du registre 37 dans la mémoire destinataire 7 ou 5, et le bus 28 permet de charger le registre-tampon 29 à partir des mémoires source 5 ou 7.

La partie pour le traitement des adresses procure les adresses des mots dans la mémoire source 5 ou 7, et dans la mémoire destinataire 7 ou 5.

Les mémoires 7 et 5 sont tour à tour source ou destinataire puisqu'on échange des données entre elles. Les adresses sont mises à jour par l'automate dans le cas de traitements récurrents.

Les valeurs initiales des adresses et les codes d'opération sont obtenus à partir du registre 4.

Cette partie est donc constituée de compteurs dont l'incrémentation et les impulsions de chargement sont issues d'un séquenceur 18 fait d'un réseau logique programmable (PLA en langue anglaise) en fonction de l'opération désirée.

L'automate est muni, outre le registre pour mémoriser le code d'opération, des registres et compteurs suivants :

registre d'adresse de source 19,

compteur d'adresse de source 20,

registre de longueur de source 21, indiquant le nombre de pixels à lire,

compteur de hauteur d'objet 22,

registre de largeur d'objet 23,

compteur de largeur d'objet 24,

registre d'adresse destinataire 25,

compteur d'adresse destinataire 26,

registre de longueur destinataire 27, indiquant le nombre de pixels à écrire.

Au début de chaque ligne, le contenu du registre 23 est transféré dans le registre 24.

Après le premier mouvement, les registres d'adresse sont incrémentés de· quatre unités, et le compteur 24 est décrémenté de quatre unités. Lorsque le compteur 24 arrive à zéro, la ligne est finie. Le contenu du registre 25 est alors transféré dans la partie inférieur du compteur 26 de manière à y restaurer l'adresse du début de la ligne. Ce compteur est incrémenté de $2^{**}n$, par une impulsion, donnant ainsi l'adresse du début de la ligne suivante. Le compteur 22 est alors décrémenté de une unité et testé. S'il contient zéro le transfert est terminé. Sinon, la même manipulation est faite sur les registres 19, 20 et 21 pour calculer la nouvelle adresse de source.

On peut considérer la partie inférieure des compteurs 20 et 26 comme représentant les coordonnées X respectivement de source et de destination, et leurs parties supérieures comme respectivement coordonnées Y de source et de destination.

Le chargement initial de l'automate consiste à lire dans le registre 4 et à introduire dans les registres et compteurs ad-hoc de l'automate les données suivantes :

code d'opération,

adresse de source envoyée dans le compteur 20 et le registre 19,

longueur de source dans le registre 21,

hauteur d'objet dans le compteur 22,

largeur d'objet dans le registre 23,

adresse de destination dans le registre 25 et le compteur 26,

longueur destinataire dans le registre 27.

Un tel automate, dont les fonctions sont ainsi définies, est aisément réalisable par l'homme du métier.

Un exemple chiffré permettra de mieux définir un mode de réalisation du procédé. La mémoire d'image a une capacité de 35K mots de 16 bits. On y accède donc par 16 bits à la fois, soit par 4 pixels à la fois. Le magasin a par exemple une capacité de 32K mots de 16 bits. Le registre a une taille réduite et peut être physiquement placé dans un morceau du magasin ou d'une mémoire propre du microprocesseur.

L'image comporte 280 lignes de 512 pixels chacune. On choisit d'affecter les deux tiers d'un temps de ligne à l'image, et le tiers restant au retour de ligne. De même, dans une image dite de 624 lignes non entrelacées, c'est-à-dire de 312 lignes par trame, on aura 280 lignes d'image et 32 lignes de retour trame. Dans le cas d'un standard dit à 525 lignes, il faudrait réduire le nombre de lignes d'image pour conserver un temps de retour trame suffisant.

Le temps de ligne habituel dans les systèmes de télévision étant de 64 S, et puisque 512 pixels sont représentés pendant les 2/3 de ce temps, la durée d'un pixel est de 83,3 nS.

L'ensemble des mémoires est partagé entre le système de gestion d'images et le microprocesseur, de telle manière qu'un dispositif de rafraîchissement commun soit suffisant. Dans ces conditions, on choisit d'attribuer en moyenne deux accès mémoire à la visualisation ou au traitement de l'image pour un accès attribué au microprocesseur. Les accès seront donc groupés par trois. En fonction de la vitesse des mémoires dynamiques couramment disponibles, trois accès mémoire demandent environ 650 nS, ce qui correspond à la durée de visualisation de presque 8 pixels. On traitera donc les pixels par groupes de 8 et le temps de base pour trois accès sera donc de 666 nS. Sur ces trois accès, deux correspondent à la visualisation, et puisqu'on accède à la mémoire par 4 pixels à la fois, ces deux accès correspondent bien à un groupe de 8 pixels.

Pour effectuer un échange il faut accéder :

une fois à la mémoire d'image pour y lire,
une fois au magasin pour y lire,
une fois à la mémoire d'image pour y écrire,
une fois au magasin pour y écrire,

ce qui nécessite quatre accès. Chaque accès portant sur quatre pixels, l'opération nécessite ainsi en moyenne un accès par pixel.

Bien entendu, pendant la durée de visualisation, deux accès sur trois sont attribués au système de visualisation 8, alors que pendant les retours de ligne ou de trame ils sont attribués au traitement de l'image.

Un retour de trame dure 32 lignes × 64 μS = 2 048 μS. Sur ce temps il faut prélever environ 128 μS pour le rafraîchissement des mémoires ; il reste donc 1 920 μS utiles pour modifier l'image, ce qui permet 2 880 temps de base comprenant chacun deux accès à l'image ; ou dispose donc de 5 760 accès pendant un retour de trame. Supposons par exemple qu'un jeu vidéo mette en scène des joueurs de football et un ballon, le ballon étant défini dans un rectangle de 12 × 8 pixels soit 96 pixels et chaque joueur dans un rectangle de 20 × 26 pixels, soit 520 pixels. Un déplacement demande deux échanges successifs avec modification de la position de l'objet entre les deux échanges, et chaque échange nécessite, comme expliqué plus haut, un accès par pixel. Un déplacement demande donc deux accès par pixel.

Pour déplacer le ballon on a besoin de : 96 × 2 = 192 accès. Il reste alors : 5 760 — 192 = 5 568 accès disponibles pendant un retour de trame pour déplacer des joueurs. Ceci permet donc de déplacer cinq jours (avec 1 040 accès par joueur), en supposant qu'ils sont en premier plan et que donc aucun autre objet n'est impliqué dans le déplacement.

On peut aussi utiliser les retours de ligne pour effectuer un traitement d'image, ce qui augmente les performances.

Bien entendu la mise en œuvre de l'invention n'est pas limitée à l'exemple décrit, on peut imaginer des variantes sans sortir du cadre de l'invention. Par exemple on peut utiliser des mémoires plus rapides ; dans ce cas on peut avoir plus de trois accès par temps de base et de ce fait utiliser les accès supplémentaires pour le traitement d'image y compris pendant les temps de visualisation, puisqu'on a seulement besoin de deux accès pour la visualisation. On peut aussi partager autrement les accès, par exemple en réalisant en séquence un lot d'accès pour la visualisation, et en stockant les données afférentes dans une mémoire-tampon, ce qui permet de libérer ensuite un lot d'accès pour le traitement de l'image, pendant qu'on tire les données de la mémoire-tampon pour la visualisation. Il est possible d'utiliser un nombre de lignes différent pour l'image, ce qui peut permettre notamment d'augmenter le temps de retour trame.

Par ailleurs, il est souvent nécessaire, par exemple dans un jeu où le microprocesseur doit savoir si un projectile a atteint son objectif, de connaître les collisions entre objets. Le procédé d'affichage ne donne aucun renseignement sur ces collisions. Il est alors nécessaire, pour les objets intéressants et seulement pour eux, de procéder à des calculs de collision de façon connue indépendamment de l'affichage proprement dit.

Il est par ailleurs intéressant de prévoir une mémoire annexe de pseudo-image qui sert à préparer certains éléments d'image à l'avance, indépendamment de l'image en cours de visualisation. On utilise avantageusement alors le procédé selon l'invention pour créer et modifier des éléments d'image dans cette mémoire annexe.

Les circuits permettant la mise en œuvre de l'invention peuvent être réunis aisément par l'homme du métier dans un seul circuit intégré. Avec seulement : un microprocesseur, par exemple un 68 070, le susdit circuit intégré, et des boîtiers de mémoire, une solution minimale est fournie pour un ordinateur personnel. La charge de travail de l'unité logique (du microprocesseur) est faible grâce aux circuits spécifiques avec l'automate, et l'unité logique peut avoir du temps libre pour le logiciel de l'utilisateur. Le système peut aussi donner lieu à une réalisation plus sophistiquée en ajoutant des mémoires de masse, d'autres mémoires dynamiques et d'autres fonctions.

## Revendications

1. Procédé pour créer et modifier le contenu d'une mémoire d'image (7) dans un dispositif de visualisation d'images synthétiques subdivisées en points élémentaires ou pixels dont la couleur et/ou la luminance sont définies par des codes numériques dans ladite mémoire d'image où une position déterminée est attribuée à chaque pixel, l'image comportant des objets pouvant recouvrir au moins partiellement d'autres objets en procurant ainsi l'effet visuel d'être placés en avant de ces derniers, le dispositif comportant en outre une mémoire d'objets, ou magasin (5), qui contient la description, pixel par pixel, d'une pluralité d'objets parmi lesquels on prélève ceux dont on a besoin pour construire l'image dans la mémoire d'image, et un registre (4) dans lequel sont placées des données indiquant notamment la position des objets dans l'image, caractérisé en ce que, la mémoire d'image (7) étant préalablement remplie complètement par une image constituant un arrière-plan, pour placer les objets dans l'image on lit tour à tour dans le registre (4), dans l'ordre où les objets doivent se recouvrir les uns les autres en partant de l'arrière-plan, la position de chaque objet à représenter, et à chaque fois on échange, pour chaque pixel de l'objet, les codes numériques de la mémoire d'image avec ceux du magasin (5), et en ce que pour déplacer un ou plusieurs objet(s) éventuellement recouvert(s) par un ou plusieurs autre(s), on effectue d'abord pour chaque objet impliqué un échange de code entre la mémoire d'image et le magasin, mais, s'il y a plusieurs objets, en traitant ceux-ci dans l'ordre inverse de celui utilisé pour placer les objets dans l'image, en ce qu'on modifie ensuite la position de l'objet ou des objets dans le registre, et enfin on replace à sa nouvelle position dans l'image chaque objet impliqué au moyen d'un nouvel échange en traitant les objets, s'il y en a plusieurs, dans l'ordre où ils doivent se recouvrir les uns les autres.

2. Procédé selon la revendication 1, caractérisé en ce que tous les objets situés du premier plan jusqu'à l'objet à déplacer le plus en arrière sont considérés comme impliqués.

3. Procédé selon l'une des revendications 1 ou 2, caractérisé en ce que, lorsqu'on replace les objets dans l'image, l'ordre de traitement des objets est différent de l'ordre utilisé lors du placement précédent.

4. Procédé selon l'une quelconque des revendications 1 à 3, caractérisé en ce que lorsqu'on replace les objets dans l'image, on enlève ou on ajoute des objets.

5. Procédé selon l'une quelconque des revendications 1 à 4, caractérisé en ce que les données de position d'objets successifs sont placées dans le registre (4) dans l'ordre selon lequel ces objets doivent se recouvrir les uns les autres.

6. Procédé selon l'une quelconque des revendications 1 à 5, caractérisé en ce que les objets sont tous rectangulaires et comportent des zones dites transparentes qui ne sont pas prises en compte dans les susdits échanges.

7. Procédé selon l'une quelconque des revendications 1 à 6, caractérisé en ce que les données du registre (4) indiquant la position de chaque objet sont organisées par blocs, chaque bloc correspondant à un objet indiquant en outre l'adresse de l'objet dans le magasin (5), ses dimensions, et des codes d'opération.

8. Procédé selon l'une quelconque des revendications 1 à 7, caractérisé en ce que l'on crée des objets nouveaux dans le magasin en les y recopiant à partir de la mémoire d'image (7).

9. Dispositif pour mettre en œuvre le procédé selon la revendication 1, caractérisé en ce qu'il comporte un automate matériel (6) pour réaliser des échanges entre la mémoire d'image (7) et la mémoire d'objets ou magasin (5), automate comportant notamment un multiplexeur (32) pour charger dans un registre des données en provenance de plusieurs registres, et un réseau logique programmable utilisé comme séquenceur pour gouverner les opérations successives du procédé.

## Claims

1. A method of producing and modifying the contents of a picture memory (7) in an apparatus for displaying synthetic pictures subdivided into elementary points or pixels, whose colour and/or luminance are defindee by digital codes in the said picture memory, in which a given position is assigned to each pixel, the picture comprising objects which can cover at least in part other objects, thus providing the visual effect of being arranged in front of the latter objects, the apparatus further comprising an object memory or magazine (5) which contains the description, pixel per pixel, of a plurality of objects, among which those objects are selected which are needed to construct the picture in the picture memory, and a register (4) in which data are stored indicating especially the position of the objects in the picture, characterized in that, the picture memory (7) being filled beforehand completely by a picture constituting a rear plane for arranging the objects in the picture, the position of each object to be represented is read one by one in the register (4) in the order in which the objects have to cover each other from the rear plane, while each time for each pixel of the object the digital codes of the picture memory are exchanged for those of the magazine (5), and in that, for displacing one or several objects, that may be covered by one or several other objects, first for each object involved an exchange of codes is effected between the picture memory and the magazine, but, if there are several objects, the latter are processed in the order inverse to that used for arranging the objects in the picture, in that then the position of the object(s) in the register is modified and finally each object involved is rearranged in its new position in the picture by means of a new exchange by processing the objects, if there are several of them, in the order in which they have to cover each other.

2. A method as claimed in Claim 1, characterized in that all the objects situated in the first plane inclusive of the object to be displaced in the hindmost position are considered to be involved.

3. A method as claimed in any one of Claims 1 or 2, characterized in that, when the objects are rearranged in the picture, the order of processing the objects is different from the order used during the preceding positioning.

4. A method as claimed in any one of the Claims 1 to 3, characterized in that, when the objects are rearranged in the picture, objects are removed or added.

5. A method as claimed in any one of Claims 1 to 4, characterized in that the data of positions of successive objects are stored in the register (4) in the order in which these objects have to cover each other.

6. A method as claimed in any one of Claims 1 to 5, characterized in that the objects are all

8

rectangular and comprise so-called transparent zones, which are not taken into account in the aforementioned exchanges.

7. A method as claimed in any one of Claims 1 to 6, characterized in that the data of the register (4) indicating the position of each object are organized per block, each block corresponding to an object indicating the address of the object in the magazine (5), its dimensions and the operation codes.

8. A method as claimed in any one of Claims 1 to 7, characterized in that new objects are formed in the magazine by recopying them therein from the picture memory (7).

9. A device for carrying out the method as claimed in Claim 1, characterized in that it comprises a material automatic control means (6) for realizing exchanges between the picture memory (7) and the object memory or magazine (5), this automatic control means comprising especially a multiplexer (32) for loading into a register data originating from several registers and a programmable logic network used as a sequencer for controlling the successive operations of the method.

**Patentansprüche**

1. Verfahren zum Erzeugen und Andern des Inhaltes eines Bildspeichers (7) in einer Anordnung zum Wiedergeben synthetischer Bilder, die in Elementarpunkte oder Bildelemente aufgeteilt sind, deren Farbton und/oder Leuchtdichte durch digitale Kodes in dem genannten Bildspeicher definiert sind, wobei jedem Bildelement eine bestimmte Position zugeordnet ist, wobei das Bild Gegenstände aufweist, die andere Gegenstände wenigstens teilweise bedecken können, wodurch auf diese Weise der visuelle Effekt geboten wird, dass sie vor die letztgenannten Gegenstände gestellt sind, wobei die Anordnung weiterhin einen Gegenstandspeicher oder ein Magazin (5) aufweist, der bzw. das die bildelementweise Beschreibung einer Vielzahl von Gegenständen enthält, aus denen diejenigen Gegenstände gewählt werden, die zum Zusammenstellen des Bildes in dem Bildspeicher gebraucht werden, sowie ein Register (4), in dem Daten gespeichert werden, die insbesondere die Lage der Gegenstände in dem Bild bezeichnen, dadurch gekennzeichnet, dass während der Bildspeicher (7) vorher völlig mit einem einen Hintergrund bildenden Bild gefüllt ist, zum Gliedern der Gegenstände in dem Bild, die Lage jedes wiederzugebenden Gegenstandes in der Reihenfolge, in der die Gegenstände einander bedecken sollen, wechselweise in das Register (4) gelesen wird, und wobei für jedes Bildelement des Gegenstandes die digitalen Kodes des Bildspeichers gegen diejenigen des Magazins (5) ausgetauscht werden, und dass zum Verschieben eines oder mehrerer Gegenstände, der bzw. die durch einen bzw. mehrere andere Gegenstände gegebenenfalls bedeckt sind, zunächst für jeden betreffenden Gegenstand ein Kodewechsel zwischen dem Bildspeicher und dem Magazin durchgeführt wird, dass aber im Falle meherer Gegenstände diese in der Reihenfolge behandelt werden, die zu derjenigen entgegengesetzt ist, die angewandt wird zum Gliedern der Gegenstände in dem Bild, und dass danach die Lage des Gegenstandes oder der Gegenstände in dem Register geändert wird und dass zum Schluss jeder betreffende Gegenstand mittels eines neuen Wechsels durch Behandlung der Gegenstände, falls es mehrere gibt, in seine neue Lage gebracht wird, und zwar in der Reihenfolge, in der sie einander bedecken sollen.

2. Verfahren nach Anspruch 1, dadurch gekennzeichnet, dass alle Gegenstände von dem Vordergrund bis zu dem hintersten zu verschiebenden Gegenstand als hierdurch betroffen betrachtet werden.

3. Verfahren nach einem der Ansprüche 1 oder 2, dadurch gekennzeichnet, dass wenn die Gegenstände in dem Bild neu gegliedert werden, die Reihenfolge der Behandlung der Gegenstände von der bei der vorhergehenden Placierung angewandten Reihenfolge abweicht.

4. Verfahren nach einem der Ansprüche 1 bis 3, dadurch gekennzeichnet, dass wenn die Gegenstände in dem Bild neu gegliedert werden, Gegenstände entfernt oder zugefügt werden.

5. Verfahren nach einem der Ansprüche 1 bis 4, dadurch gekennzeichnet, dass die Daten der Lagen der aufeinanderfolgenden Gegenstände in der Reihenfolge, in der diese Gegenstände einander bedecken sollen, in dem Register (4) gespeichert sind.

6. Verfahren nach einem der Ansprüche 1 bis 5, dadurch gekennzeichnet, dass die Gegenstände alle rechteckig sind und sogenannte transparente Zonen aufweisen, die bei den genannten Wechseln nicht berücksigtigt werden.

7. Verfahren nach einem der Ansprüche 1 bis 6, dadurch gekennzeichnet, dass die Daten des Registers (4), welche die Lage jedes Gegenstandes angeben, blockweise gegliedert sind, wobei jeder Block einem Gegenstand entspricht, der u. a. die Adresse des Gegenstandes in dem Magazin (5), die Abmessungen und Operationskodes aufweist.

8. Verfahren nach einem der Ansprüche 1 bis 7, dadurch gekennzeichnet, dass in dem Magazin neue Gegenstände gebildet werden, indem sie darin von dem Bildspeicher (7) kopiert werden.

9. Anordnung zum Durchführen des Verfahrens nach Anspruch 1, dadurch gekennzeichnet, dass sie einen Automaten (6) aufweist zum Durchführen der Wechsel zwischen dem Bildspeicher (7) und dem Gegenstandspeicher oder Magazin (5), wobei dieser Automat insbesondere einen Multiplexer (32) zum in ein Register Eingeben von Daten, die von mehreren Registern herrühren, sowie ein programmierbares logisches Netzwerk aufweist, das als Programmgeber zur Steuerung der aufeinanderfolgenden Operationen des Verfahrens benutzt wird.

FIG.1

FIG.2

FIG.3